# EUROPEAN PATENT SPECIFICATION

(11) **EP 2 675 573 B1**
(45) Date of publication and mention of the grant of the patent: **26.11.2014**
(21) Application number: 12705751.1
(22) Date of filing: 13.02.2012
(51) Int. Cl.: B65G 53/28, B05B 7/14, F04B 53/22

(54) **POWDER PUMP FOR CONVEYING COATING POWDER**
PULVERPUMPE ZUR BEFÖRDERUNG VON BESCHICHTUNGSPULVER
POMPE À POUDRE POUR TRANSPORTER UNE POUDRE DE REVÊTEMENT

(30) Priority: 14.02.2011 DE 102011004035
(43) Date of publication of application: 25.12.2013
(73) Proprietor: Gema Switzerland GmbH, 9015 St. Gallen (CH)
(72) Inventor: SANWALD, Marco, CH-9030 Abtwil (CH); STAUB, Thomas, CH-9200 Gossau (CH)
(74) Representative: Meissner, Bolte & Partner GbR
(86) International application number: PCT/US2012/024847
(87) International publication number: WO 2012/112436

(56) References cited:
- WO-A1-2004/087331
- DE-B3-102005 006 522

## Description

The present invention relates to a powder pump for conveying coating powder according to the preamble of independent patent claim 1.

Accordingly, the invention relates to a powder pump which has a powder chamber with a preferably cylindrical and in particular circular-cylindrical casing tube and a gas-permeable filter element arranged inside the casing tube, with furthermore a first pinch valve, connected to the intake-side end region of the powder chamber, and a second pinch valve, connected to the delivery-side end region of the powder chamber, being provided, and with the powder chamber having at least one connection for alternately creating a positive pressure and a negative pressure in the powder chamber.

Such a powder pump is known in principle from the prior art. For example, document EP 1 551 558 A1 discloses a powder pump which has a first powder chamber and a second powder chamber, arranged parallel to the first powder chamber. The powder chambers of the powder pump known from this prior art are respectively bounded both on the intake side and on the delivery side by a mechanically actuated pinch valve arrangement.

To be specific, it is in this case provided that, in the intake-side and delivery-side regions of the powder pump, the powder hoses connected to the respective powder chambers can be deformed by a mechanically actuated rod in order to pinch off or open the hose portion as and when required. The powder chambers of the known pump also each have a gas-permeable filter element. A negative pressure can be set in the powder chambers separately from each other by way of a vacuum connection, as a result of which coating powder can be sucked into the powder chamber by way of the intake-side end region of the respective powder chamber. Subsequently, the pinch valve provided at the intake-side end region of the powder chamber is closed and the pinch valve provided at the delivery-side end region of the powder chamber is opened. The presence of a positive pressure in the powder chamber has the effect that the coating powder previously sucked into the powder chamber is again discharged from the powder chamber by way of the delivery-side end region.

It has been found in practical use that a powder pump of the type described above has various disadvantages, in particular with regard to its maintenance. In particular, in the case of the known powder pump, a possibly clogged filter element can only be exchanged with relatively great effort, since virtually the complete powder pump has to be unscrewed for this purpose. In particular, the solution known from this prior art does not allow a filter element to be exchanged without interfering with the structure of the pinch valves. There is consequently the risk of leakages occurring after maintenance or the exchange of the filter element, so that dependable functioning of the powder pump is no longer ensured.

On the basis of these problems, the present invention is based on the object of developing a powder pump of the type mentioned at the beginning, and as known for example from the document EP 1 551 558 A1, to the extent that it can be maintained with relatively little effort, it being possible in particular for the gas-permeable filter element of the powder chamber to be exchanged without the risk of impairing the functioning of the pump.

This object is achieved by the subject matter of independent patent claim 1. Advantageous developments are specified in the dependent patent claims.

In particular, in the case of the solution according to the invention, it is provided that - as a difference from the solution known from the prior art - the intake-side and delivery-side pinch valves of the powder pump are not directly connected to the powder chamber. Rather, the solution according to the invention uses a connection element, which is connected to the first (intake-side) pinch valve and is fitted onto or inserted into the intake-side end region of the powder chamber. Also used is a second connection element, which is connected to the second (delivery-side) pinch valve and is fitted onto or inserted into the delivery-side end region of the powder chamber.

In addition, the solution according to the invention has a mount in order to receive the powder chamber with the connection elements fitted on or inserted in on both sides. To allow secure fixing of the connection elements fitted on or inserted in on both sides, also provided is an arresting mechanism, with which the connection elements, fitted onto or inserted into the powder chamber on both sides, are arrested in relation to the mount when the powder chamber with the connection elements fitted on or inserted in on both sides has been received by the mount.

The advantages that can be achieved by the solution according to the invention are obvious: the fact that the corresponding connection elements that are connected to the intake-side pinch valve and the delivery-side pinch valve are fitted onto or inserted into the corresponding end region of the powder chamber means that - for example for the purpose of maintenance - the powder chamber can be separated from the connection elements, and consequently from the corresponding pinch valves, by simply releasing this fitted or inserted connection. Specifically, with the solution according to the invention it is possible in a simple way, for example when exchanging the gas-permeable filter element arranged in the powder chamber, to release the fitted or inserted connection between the corresponding connection element and the powder chamber. The powder chamber with the filter element received therein is subsequently separate from the intake-side and delivery-side pinch valves.

In order that no powder can escape from the fitted or inserted connections during operation of the powder pump, and consequently in particular that the connection elements fitted on or inserted in on both sides are securely fixed to the powder chamber, it is provided according to the invention that the connection elements fitted onto or inserted into the powder chamber on both sides are arrested in relation to the mount when the powder chamber with the connection elements fitted on or inserted in on both sides has been received by the mount.

In a preferred implementation of the solution according to the invention, serving as the arresting mechanism are a first bolt, connected to the first connection element and protruding radially from the first connection element, and a second bolt, connected to the second connection element and protruding radially from the second connection element. These two bolts can each be received in a longitudinal slit, provided in the mount and running perpendicularly to the longitudinal direction of the powder chamber. In this way it is ensured that the two connection elements fitted onto or inserted into the powder chamber on both sides cannot move in the longitudinal direction in relation to the powder chamber when the powder chamber with the connection elements fitted on or inserted in on both sides has been received by the mount, and in particular when the first bolt, protruding radially from the first connection element, and the second bolt, protruding radially from the second connection element, have been received in the corresponding longitudinal slit provided in the mount.

In a preferred development of the last-mentioned embodiment, it is provided that the arresting mechanism has two first bolts, which are arranged diametrically in relation to each other, are each connected to the first connection element and each protrude radially from the first connection element, the mount having two first longitudinal slits for each receiving one of the two first bolts.

Alternatively or in addition to this, it is conceivable that the arresting mechanism has two second bolts, which are arranged diametrically in relation to each other, are each connected to the second connection element and each protrude radially from the second connection element, the mount having two second longitudinal slits for each receiving one of the two second bolts.

The arresting of the connection elements fitted on or inserted in on both sides in relation to the powder chamber can be further improved if the end of the first longitudinal slit is adjoined at right angles by a short transverse slit or if the end of the second longitudinal slit is adjoined at right angles by a short transverse slit. In this way it can be effectively prevented that the powder chamber with the two connection elements fitted onto or inserted into the powder chamber on both sides can slide out of the longitudinal slits again.

Of course, further solutions also come into consideration for the specific configuration of the arresting mechanism. In particular, it is also conceivable that on the mount itself there are provided radially protruding bolts which engage in corresponding longitudinal slits that are formed respectively in the first and second connection elements.

With the configuration of the powder chamber described above and the connection elements fitted on or inserted in on both sides it is on the one hand ensured that the connection elements are securely fixed in relation to the powder chamber during the operation of the powder pump, and in particular whenever the powder chamber with the connection elements fitted on or inserted in on both sides has been received in the mount. To exchange the filter element received in the powder chamber, it is merely required to take the powder chamber with the connection elements fitted on or inserted in on both sides out of the mount, the arresting of the connection elements being released at the same time. Consequently, taking the powder chamber out allows the connection elements fitted on or inserted in at the end regions of the powder chamber to be pulled out, in order thereby to release the fitted on or inserted in connection. The filter element can subsequently be exchanged without any problem. The subsequent installation of the powder chamber is performed in the reverse sequence.

In order to simplify not only the exchange of the filter element but also the maintenance of the pinch valves that are used in the case of the powder pump, it is provided in an advantageous development of the solution according to the invention that the first connection element has a stub-like region, facing the powder chamber, and a tapering region, facing the first pinch valve and tapering conically in the direction of the first pinch valve, the stub-like region of the first connection element being fitted onto or inserted into the intake-side end region of the powder chamber and the conically tapering region of the first connection element being connected to the first pinch valve.

Alternatively or in addition to this, it is conceivable that the second connection element also has a stub-like region, facing the powder pump, and a tapering region, facing the second pinch valve and tapering conically in the direction of the second pinch valve, the stub-like region of the second connection element being fitted onto or inserted into the delivery-side end region of the powder chamber and the conically tapering region of the second connection element being connected to the second pinch valve.

Preferably, in the case of the aforementioned embodiments of the powder pump according to the invention, the stub-like region of the first or second connection element and the tapering region of the first or second connection element, tapering conically in the direction of the corresponding pinch valve, are inserted in each other and releasably arrested in relation to each other, preferably with the aid of a screw.

To exchange one or both pinch valves, it is accordingly merely required to release the arrestment between the stub-like region of the corresponding connection element and the conically tapering region of the connection element, the stub-like region of the connection element remaining firmly connected to the powder chamber and it being possible for the conically tapering region of the connection element together with the pinch valve that is to be maintained or exchanged to be released from the powder pump.

With regard to the configuration of the pinch valves that are used in the case of the powder pump according to the invention, it is of advantage if each pinch valve has a pinch valve housing with an inlet-side flange region and an outlet-side flange region as well as an elastically deformable valve element, preferably in the form of a hose portion. In this case, the valve element should be arranged inside the pinch valve housing in such a way that the inlet of the pinch valve can be brought into fluidic connection with the outlet of the pinch valve by way of the valve element formed as a hose portion.

It is of advantage here if the pinch valve housing has at least one connection for feeding compressed air as and when required into the space formed between the inner wall of the pinch valve housing and the valve element arranged inside the pinch valve housing. When feeding in compressed air, a positive pressure is formed in the space between the inner wall of the pinch valve housing and the valve element, as a result of which the valve element is pressed together in the radial direction and the pinch valve is closed. If the pressure in the pinch valve housing is subsequently relieved, the valve element resumes its initial state, so that there is a fluidic connection between the inlet of the pinch valve and the outlet of the pinch valve by way of the valve element.

In a preferred implementation of the solution according to the invention, it is conceivable here that the pinch valve housing has at least one connection for creating a negative pressure as and when required inside the pinch valve housing. In this way, the opening time of the pinch valve can be reduced.

The invention is not restricted to the powder pump described above as such, but also includes an arrangement comprising a powder pump of the type described above and a further identical powder pump. This arrangement forms a coating powder conveying device.

Each powder pump of the coating powder conveying device has at least one gas path, by which the powder chamber can be connected alternately to a vacuum line, for sucking coating powder into the powder chamber through the open powder-inlet valve while the powder-outlet valve is closed, or to a compressed-air line, for pneumatically discharging a portion of powder present in the powder chamber through the open powder-outlet valve while the powder-inlet valve is closed. The two powder pumps can be alternately switched over to sucking in and discharging powder, it being possible alternately to switch the one pump to intake and the other substantially at the same time to discharge in a first operating phase, and then to switch the one pump to discharge and the other substantially at the same time to intake in a second operating phase.

In the case of a preferred embodiment of the coating powder conveying device, the gas path contains a suction-air opening and a compressed-air opening in a circumferential housing wall of the powder chamber, a microporous filter tube, which, at least over part of the length or preferably the entire length of the powder chamber, forms the circumferential wall of the powder chamber between the powder inlet and the powder outlet and separates the powder chamber from an annular chamber. The annular chamber is formed between the outer circumference of the filter tube and the inner circumference of the circumferential housing wall and surrounds the filter element formed as a filter tube. The filter tube is permeable to air, but not to coating powder on account of its small pore size. It preferably consists of a sintered material. The suction-air opening preferably opens out into the annular chamber near to the powder outlet, and the compressed-air opening preferably opens out into the annular chamber near to the powder inlet.

For connecting the suction-air opening and the compressed-air opening to the suction-air line and the compressed-air line, respectively, and for connecting the powder-inlet valve and the powder-outlet valve of the two powder pumps alternately to the compressed-air line and the outside atmosphere and/or a suction line, a valve device or pneumatic subassembly, which has for example two valves and can be controlled by a control device, may be provided.

Exemplary embodiments of the powder pumps according to the invention are described in more detail below with reference to the accompanying drawings, in which:
- Figure 1: shows a schematic representation of a coating powder conveying device with two powder pumps arranged parallel to each other according to an exemplary embodiment of the present invention;
- Figure 2: shows a perspective view of the internal structure of a coating powder conveying device with two powder pumps arranged parallel to each other according to an exemplary embodiment of the present invention;
- Figure 3: shows a perspective view of the two powder pumps arranged parallel to each other of the coating powder conveying device according to Figure 2, each in the state in which they have been received in the associated powder chamber mount;
- Figure 4: shows a longitudinal sectional view of part of a powder pump used in the case of the coating powder conveying device according to Figure 2;
- Figure 5a: shows an exploded representation of one of the two powder pumps that are used in the case of the coating powder conveying device according to Figure 2; and
- Figure 5b: shows a perspective view of one of the two powder pumps that are used in the case of the coating powder conveying device according to Figure 2.

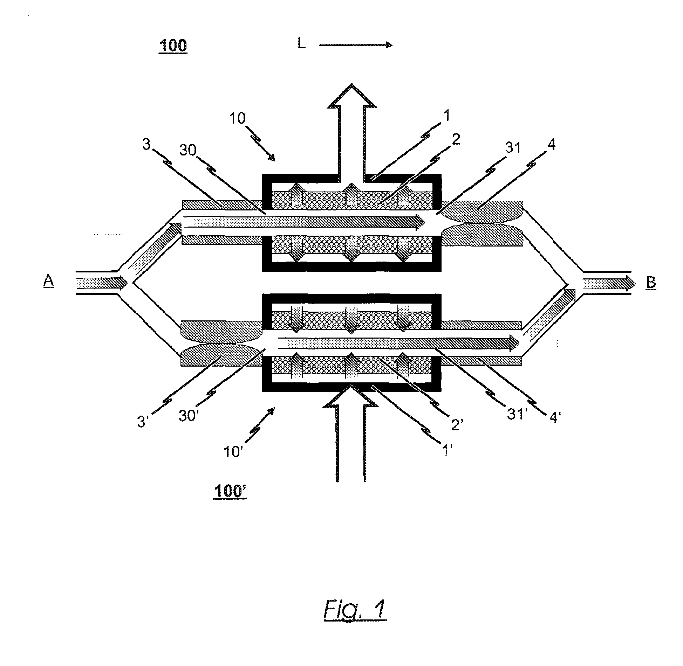

Initially only with reference to the representation in Figure 1, a description is given below of the functioning of a coating powder conveying device in which two powder pumps 100, 100' arranged parallel to each other according to an exemplary embodiment of the present invention are used.

As schematically represented in Figure 1, each of the two powder pumps 100, 100' arranged parallel to each other has a powder chamber 10, 10', which is formed by a cylindrical, in particular circular-cylindrical, casing tube 1, 1' and a filter element 2, 2' received inside the casing tube. Each powder chamber 10, 10' has a powder inlet 30, 30' with a powder-inlet valve 3, 3' and a powder outlet 31, 31' with a powder-outlet valve 4, 4'. The respective powder-inlet valves 3, 3' are also referred to hereafter as "first valves" or "intake-side valves". The powder-outlet valves 4, 4' are referred to as "second valves" or "delivery-side valves".

During the intake process, a vacuum (negative pressure) is generated in the powder chamber 10, 10' of the powder pump 100, 100'. This negative pressure sucks the coating powder into the powder chamber 10, 10' by way of the corresponding powder inlet 30, 30'. The fine-porous filter element 2, 2' in the powder chamber 10, 10' separates the powder. During the intake process, the powder chamber 10, 10' is connected to the output side or delivery side B by the delivery-side valve 4, 4'.

During the conveying process, on the other hand, the intake-side valve 3, 3' on the powder inlet side A of the powder chamber 10, 10' is closed, while the delivery-side valve 4, 4' is opened. The coating powder previously sucked into the powder chamber 10, 10' during the intake process is then forced out of the powder chamber 10, 10' and further conveyed by means of positive pressure, which is built up by compressed air through the fine-porous filter element 2, 2'.

As the representation in Figure 1 reveals, the intake process and conveying process alternate between the two powder pumps 100, 100' arranged parallel to each other.

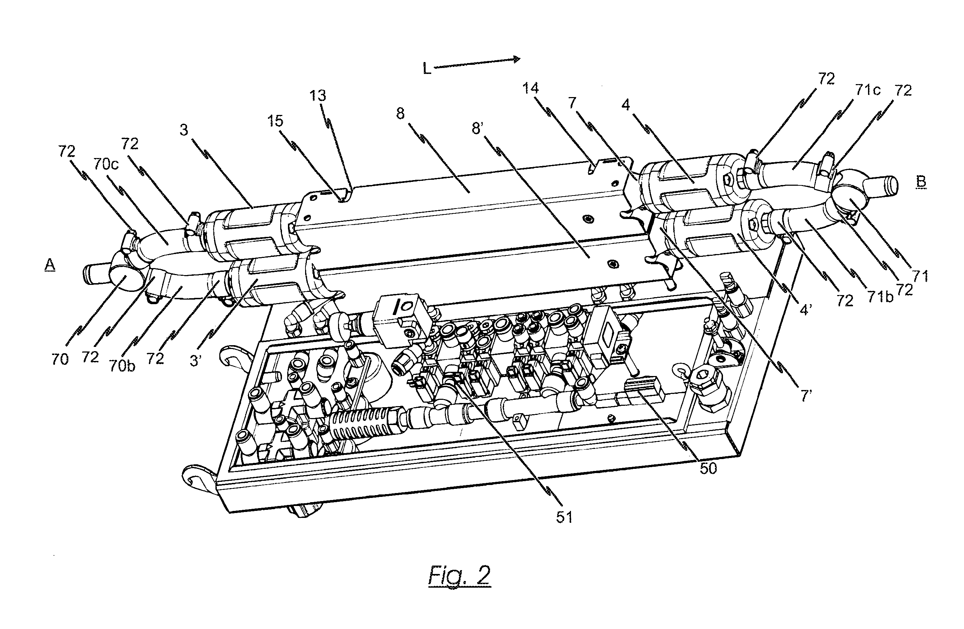

With reference to the representations in Figures 2 to 5, there follows a description of an exemplary embodiment of a coating powder conveying device in which two powder pumps 100, 100' arranged parallel to each other according to an embodiment of the present invention are used.

Specifically, Figure 2 shows in a perspective view the internal structure of a coating powder conveying device with two powder pumps 100, 100' arranged parallel to each other according to an exemplary embodiment of the present invention. The coating powder conveying device has two powder pumps 100, 100', each of the two powder pumps 100, 100' having a powder chamber 10, 10' with a cylindrical and in particular circular-cylindrical casing tube 1, 1' and a gas-permeable filter element 2, 2' arranged inside the casing tube 1, 1'. The filter element 2, 2' is preferably a rigid body of sintered material, preferably of sintered metal, for example bronze or aluminum, or sintered plastic or a sintered material mixture.

Respectively provided at the powder inlet of each powder pump 100, 100' is a first pinch valve 3, 3', connected to the intake-side end region of the powder chamber 10, 10'. A second pinch valve 4, 4' is connected to the respective delivery-side end region of the powder chamber 10, 10'.

Although in the case of the exemplary embodiment pinch valves are respectively used as the powder-inlet and powder-outlet valves, they may be of any kind desired.

In the case of the embodiment represented, the powder-inlet side of the two first (intake-side) pinch valves 3, 3' are connected by way of supply-line branches 70c, 70b of a Y connecting piece 70 to a powder supply line, which leads for example to a powder container (not expressly represented in Figure 2). For this purpose, hose connectors 75 are used, in order to connect the powder-inlet side of the two first pinch valves 3, 3' to the supply-line branches 70c, 70b of the Y connecting piece 70.

However, instead of a Y connecting piece 70, it is also conceivable to connect the respective powder-inlet sides of the first (intake-side) pinch valves 3, 3' to a powder container or to two different powder containers by way of separate powder supply lines.

In the case of the embodiment represented, the powder outlets of the two second (delivery-side) pinch valves 4, 4' are connected by discharge-line branches 71c, 71b, for example of a Y-shaped line connecting piece 71, to one end of a powder discharge hose, the other end of which opens out in a further powder container (not represented). The powder discharge line may be a rigid pipeline, but is preferably a flexible hose.

In the case of the embodiment represented in Figure 2, the powder chambers 10, 10' of the two powder pumps 100, 100' arranged parallel to each other are each received in a mount 8, 8' and arrested there. The manner in which the powder chambers 10, 10' are arrested and received in the respective mounts 8, 8' is described in more detail with reference to the following drawings.

The representation in Figure 2 also reveals that the exemplary embodiment of the coating powder conveying device has a pump controller 50 and a pneumatic group 51 that can be activated by the pump controller 50, in order to operate the two powder pumps 100, 100' arranged parallel to each other in phase opposition according to the functional principle described above with reference to Figure 1.

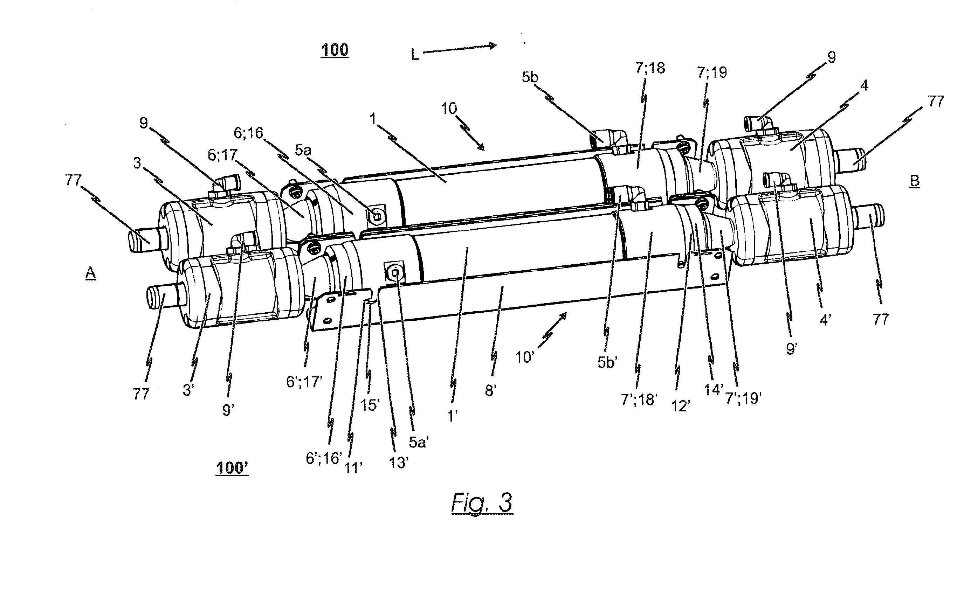

With reference to the representations in Figures 3 to 5, there follows a more detailed description of the structure of each powder pump 100, 100' that is used in the case of the coating powder conveying device according to Figure 2.

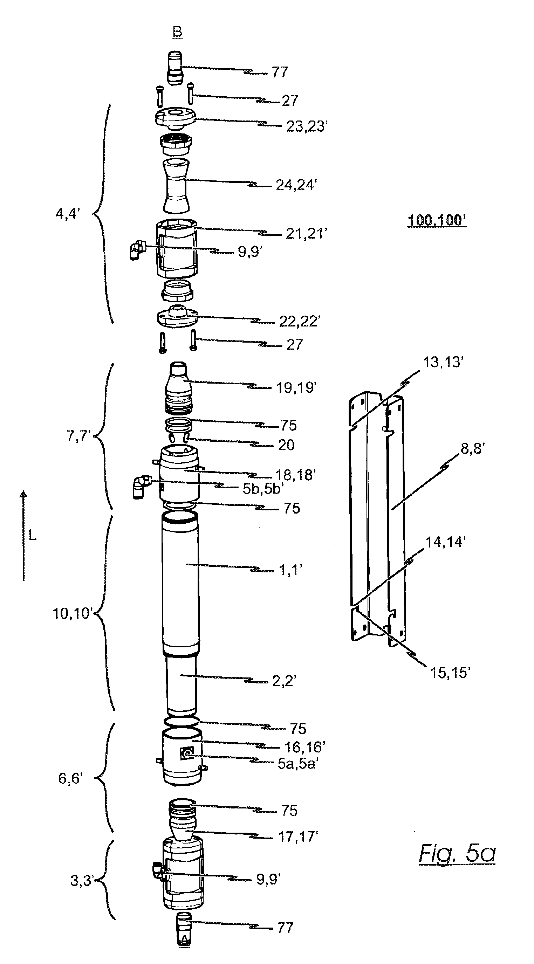

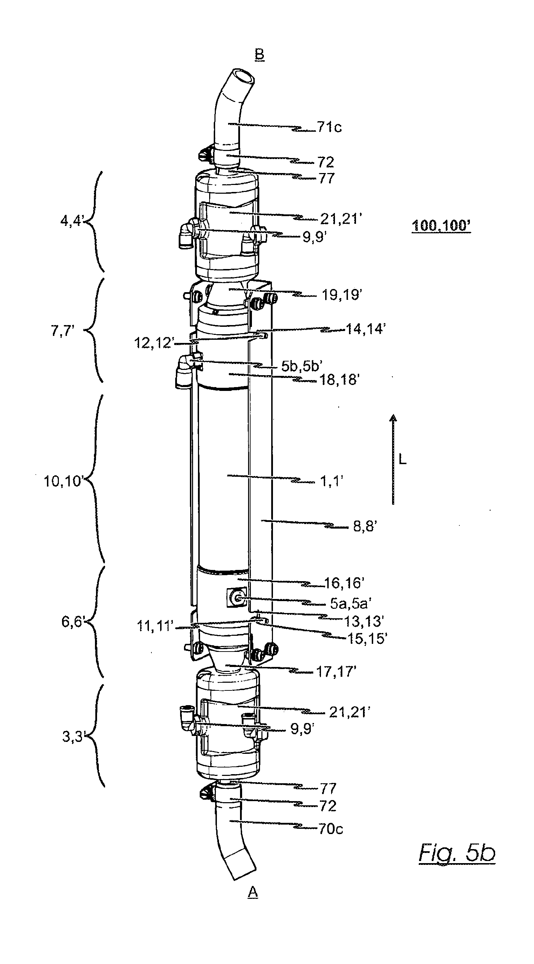

As revealed in particular by the representation in Figure 5a, which shows an exploded representation of a powder pump 100 or 100', each powder pump 100, 100' has a casing tube 1, 1', inside which a gas-permeable filter element 2, 2' is arranged. The casing tube 1, 1' with the filter element 2, 2' received inside it forms the powder chamber 10, 10' of the corresponding powder pump 100, 100'.

Provided at the intake-side end region of the powder chamber 10, 10' is a first (intake-side) pinch valve 3, 3'. A second (delivery-side) pinch valve 4, 4' is connected to the delivery-side end region of the respective powder chamber 10, 10'.

In the case of the representation in Figure 5a, the first (intake-side) pinch valve 3, 3' is shown in the assembled state, while the second (delivery-side) pinch valve 4, 4' is likewise shown in an exploded representation. The structure and the functioning of the first and second pinch valves 3, 3'; 4, 4' are identical in the embodiment represented.

Accordingly, each pinch valve 3, 3'; 4, 4' has a pinch valve housing 21, 21' with an inlet-side flange 22, 22' and an outlet-side flange 23, 23'. An elastically deformable valve element 24, 24' is received in the pinch valve housing 21, 21'. This elastically deformable valve element 24, 24' is specifically an elastically deformable hose portion. Each flange 22, 22'; 23, 23' has a hose connection 77, to which a powder hose can be connected.

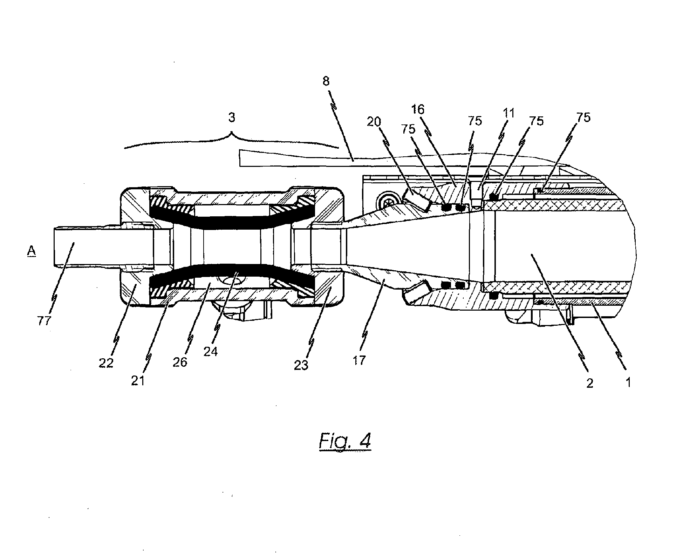

As the representation in Figure 4 reveals, in the case of each pinch valve 3, 3'; 4, 4' the valve element 24, 24' is arranged inside the pinch valve housing 21, 21' in such a way that the inlet of the pinch valve 3, 4; 3', 4' can be brought into fluidic connection with the outlet of the pinch valve 3, 4; 3', 4' by way of the valve element 24, 24' formed as a hose portion. The pinch valve housing 21, 21' has a connection 9, 9', in order to feed compressed air as and when required into the space 26, 26' formed between the inner wall of the pinch valve housing 21, 21' and the valve element 24, 24' arranged inside the pinch valve housing 21, 21'. When supplying compressed air, the valve element 24, 24' is elastically deformed, so that the fluidic connection between the inlet and the outlet of the pinch valve is interrupted. If, on the other hand, there is no compressed air in the intermediate space between the inner wall of the pinch valve housing 21, 21' and the valve element 24, 24' arranged inside the pinch valve housing 21, 21', the previously elastically deformed valve element 24, 24' reverts to its initial state, in which there is a fluidic connection between the inlet and the outlet of the pinch valve housing.

A vacuum connection may also be connected by way of the at least one connection 9, 9' of the pinch valve, in order to evacuate the compressed air previously introduced into the intermediate space 26, 26' for rapid opening of the pinch valve.

As the exploded representation in Figure 5a reveals, the inlet-side flange 22, 22' and the outlet-side flange 23, 23' of each pinch valve is respectively releasably fastened to the pinch valve housing 21, 21' with the aid of screws 27. In this way, the pinch valve is configured as a component which can be connected to the appropriate powder chamber 10, 10' by way of a corresponding connection element.

Specifically, each powder pump 100, 100' is provided with a first connection element 6, 6', which is fitted onto or inserted into the intake-side end region of the corresponding powder chamber 10, 10'. This connection element 6, 6' is connected to the first (intake-side) pinch valve 3, 3'. In the same way, each powder pump 100, 100' has a second connection element 7, 7', which is fitted onto or inserted into the delivery-side end region of the powder chamber 10, 10' and connected to the second (delivery-side) pinch valve 4, 4'.

The representation in Figure 5a reveals in particular that the first connection element 6, 6' has a stub-like region 16, 16', facing the powder chamber 10, 10', and a tapering region 17, 17', facing the first (intake-side) pinch valve 3, 3' and tapering conically in the direction of the first pinch valve 3, 3'. The stub-like region 16, 16' of the first connection element 6, 6' has in this case been fitted onto or inserted into the intake-side end region of the powder chamber 10, 10', while the conically tapering region 17, 17' of the first connection element 6, 6' has been connected to the first pinch valve 3, 3'.

The representation in Figure 4 reveals that, in the case of the preferred embodiment of the present invention, the stub-like region 16, 16' of the first connection element 6, 6' and the tapering region 17, 17' of the first connection element 6, 6', tapering conically in the direction of the first pinch valve 3, 3', are inserted in each other and releasably arrested in relation to each other, preferably with the aid of at least one countersunk screw.

In the same way, in the case of the preferred embodiment of the present invention it is provided that the second connection element 7, 7', which has been fitted onto or inserted into the delivery-side end region of the powder chamber 10, 10' and connected to the second (delivery-side) pinch valve 4, 4', has a stub-like region 18, 18', facing the powder chamber 10, 10', and a tapering region 19, 19', facing the second pinch valve 4, 4' and tapering conically in the direction of the second pinch valve 4, 4', the stub-like region 18, 18' of the second connection element 7, 7' being fitted onto or inserted into the delivery-side end region of the powder chamber 10, 10' and the conically tapering region 19, 19' of the second connection element 7, 7' being connected to the second pinch valve 4, 4'. Specifically, it is in this case preferred if the stub-like region 18, 18' of the second connection element 7, 7' and the tapering region 19, 19' of the second connection element 7, 7', tapering conically in the direction of the second pinch valve 4, 4', are inserted in each other and releasably arrested in relation to each other, likewise preferably with the aid of at least one countersunk screw 20.

Suitable O-rings 75 are preferably used for sealing the fitted or inserted connections used in the case of the solution according to the invention.

In order to be able to securely connect the respective connection elements (first connection elements 6, 6' and second connection elements 7, 7') to the corresponding powder chambers 10, 10', it is provided that the connection elements 6, 6'; 7, 7' are respectively fitted onto or inserted into the intake-side or delivery-side end region of the powder chamber 10, 10'. The powder chamber 10, 10' with the connection elements 6, 7; 6', 7' fitted on or inserted in on both sides is subsequently received in a mount 8, 8'. This mount 8, 8' also serves for arresting the connection elements 6, 7; 6', 7', fitted onto or inserted into the powder chamber 10, 10' on both sides, in relation to the mount 8, 8' when the powder chamber 10, 10' with the connection elements 6, 7; 6', 7' fitted on or inserted in on both sides has been received by the mount 8, 8'.

In the case of the embodiment represented, used for this purpose are a first bolt 11, 11', connected to the first connection element 6, 6' and protruding radially from the first connection element 6, 6', and a second bolt 12, 12', connected to the second connection element 7, 7' and protruding radially from the second connection element 7, 7'. These bolts 11, 12; 11', 12' are received by corresponding longitudinal slits 13, 13', running perpendicularly to the longitudinal direction L of the powder chamber 10, 10', when the respective powder chamber 10, 10' with the connection elements 6, 7; 6', 7' fitted on or inserted in on both sides is inserted into the mount 8, 8'.

As the representation in Figure 5a reveals, the end of the first longitudinal slit 13, 13' is adjoined at right angles by a short transverse slit 15, 15', in order to prevent unintentional sliding out of the powder chamber 10, 10' received in the mount 8, 8'.

The invention is not restricted to the exemplary embodiments described above, but to the scope of the appended claims.

## Claims

1. A powder pump (100; 100') for conveying coating powder, the powder pump (100; 100') having the following:
- a powder chamber (10; 10') with a preferably cylindrical and in particular circular-cylindrical casing tube (1; 1') and a gas-permeable filter element (2; 2') arranged inside the casing tube (1; 1');
- a first pinch valve (3; 3'), connected to the intake-side end region of the powder chamber (10; 10'); and
- a second pinch valve (4; 4'), connected to the delivery-side end region of the powder chamber (10; 10'),
the powder pump (100; 100') having at least one connection (5a, 5b; 5a', 5b') for alternately creating a positive pressure and a negative pressure in the powder chamber (10; 10'),
**characterized by**
a first connection element (6; 6'), which is connected to the first pinch valve (3; 3') and is fitted onto or inserted into the intake-side end region of the powder chamber (10; 10');
a second connection element (7; 7'), which is connected to the second pinch valve (4; 4') and is fitted onto or inserted into the delivery-side end region of the powder chamber (10; 10');
a mount (8; 8') for receiving the powder chamber (10; 10') with the connection elements (6, 7; 6', 7') fitted on or inserted in on both sides; and
an arresting mechanism for arresting the connection elements (6, 7; 6', 7'), fitted onto or inserted into the powder chamber (10; 10') on both sides, in relation to the mount (8; 8') when the powder chamber (10; 10') with the connection elements (6, 7; 6', 7') fitted on or inserted in on both sides has been received by the mount (8; 8').

2. The powder pump (100; 100') as claimed in claim 1,
the arresting mechanism having a first bolt (11; 11'), connected to the first connection element (6; 6') and protruding radially from the first connection element (6; 6'), and a second bolt (12; 12'), connected to the second connection element (7; 7') and protruding radially from the second connection element (7; 7'); and
the arresting mechanism also having a first longitudinal slit (13; 13'), provided in the mount (8; 8') and running perpendicularly to the longitudinal direction (L) of the powder chamber (10; 10'), for receiving the first bolt (11; 11'), protruding radially from the first connection element (6; 6'), and a second longitudinal slit (14; 14'), provided in the mount (8; 8') and running perpendicularly to the longitudinal direction (L) of the powder chamber (10; 10'), for receiving the second bolt (12; 12'), protruding radially from the second connection element (7; 7').

3. The powder pump (100; 100') as claimed in claim 2,
the end of the first longitudinal slit (13; 13') being adjoined at right angles by a short transverse slit (15; 15'); or
the end of the second longitudinal slit (14; 14') being adjoined at right angles by a short transverse slit (15; 15').

4. The powder pump (100; 100') as claimed in claim 2 or 3,
the arresting mechanism (2; 2') having first bolts (11; 11'), which are arranged diametrically in relation to each other, are each connected to the first connection element (6; 6') and each protrude radially from the first connection element (6; 6'), and the mount (8, 8') having two first longitudinal slits (13; 13') for each receiving one of the two first bolts (11; 11').

5. The powder pump (100; 100') as claimed in one of claims 2 to 4,
the arresting mechanism having two second bolts (12; 12'), which are arranged diametrically in relation to each other, are each connected to the second connection element (7; 7') and each protrude radially from the second connection element (7; 7'), and the mount (8, 8') having two second longitudinal slits (14; 14') for each receiving one of the two second bolts (12; 12').

6. The powder pump (100; 100') as claimed in one of claims 1 to 5,
the first connection element (6; 6') having a stub-like region (16; 16'), facing the powder chamber (10; 10'), and a tapering region (17; 17'), facing the first pinch valve (3; 3') and tapering conically in the direction of the first pinch valve (3; 3'),
the stub-like region (16; 16') of the first connection element (6; 6') being fitted onto or inserted into the intake-side end region of the powder chamber (10; 10') and the conically tapering region (17; 17') of the first connection element (6; 6') being connected to the first pinch valve (3; 3').

7. The powder pump (100; 100') as claimed in claim 6,
the stub-like region (16; 16') of the first connection element (6; 6') and the tapering region (17; 17') of the first connection element (6; 6'), tapering conically in the direction of the first pinch valve (3; 3'), being inserted in each other and releasably arrested in relation to each other, preferably with the aid of at least one countersunk screw (20).

8. The powder pump (100; 100') as claimed in one of claims 1 to 7,
the second connection element (7; 7') having a stub-like region (18; 18'), facing the powder chamber (10; 10'), and a tapering region (19; 19'), facing the second pinch valve (4; 4') and tapering conically in the direction of the second pinch valve (4; 4'),
the stub-like region (18; 18') of the second connection element (7; 7') being fitted onto or inserted into the delivery-side end region of the powder chamber (10; 10') and the conically tapering region (19; 19') of the second connection element (7; 7') being connected to the second pinch valve (4; 4').

9. The powder pump (100; 100') as claimed in claim 8,
the stub-like region (18; 18') of the second connection element (7; 7') and the tapering region (19; 19') of the second connection element (7; 7'), tapering conically in the direction of the second pinch valve (4; 4'), being inserted in each other and releasably arrested in relation to each other, preferably with the aid of at least one countersunk screw (20).

10. The powder pump (100; 100') as claimed in one of claims 1 to 9,
the first pinch valve (3; 3') and the second pinch valve (4; 4') each having the following:
- a pinch valve housing (21; 21') with an inlet-side flange (22; 22') and an outlet-side flange (23; 23'); and
- an elastically deformable valve element (24; 24') in the form of a hose portion,
the valve element (24; 24') being arranged inside the pinch valve housing (21; 21') in such a way that the inlet of the pinch valve (3, 4; 3', 4') can be brought into fluidic connection with the outlet of the pinch valve (3, 4; 3', 4') by way of the valve element (24; 24') formed as a hose portion,
the pinch valve housing (21; 21') having at least one connection (25; 25') for feeding compressed air as and when required into the space (26; 26') formed between the inner wall of the pinch valve housing (21; 21') and the valve element (24; 24') arranged inside the pinch valve housing (21; 21').

11. The powder pump (100; 100') as claimed in claim 10,
the pinch valve housing (21; 21') having at least one connection (9) for creating a negative pressure as and when required in the space (26) formed between the inner wall of the pinch valve housing (21; 21') and the valve element (24; 24') arranged inside the pinch valve housing (21; 21').

12. The powder pump (100; 100') as claimed in claim 10 or 11,
the inlet-side flange (22; 22') and the outlet-side flange (23; 23') of the pinch valve (3, 4; 3', 4') being respectively releasably fastened to the pinch valve housing (21; 21') with the aid of screws (27).

13. The powder pump (100; 100') as claimed in one of claims 10 to 12 in combination with claim 6 or a claim referring back to claim 6, the tapering region (17; 17') of the first connection element (6; 6'), tapering conically in the direction of the first pinch valve (3; 3'), being connected to the outlet of the first pinch valve (3; 3') by way of the outlet-side flange (23; 23') of the first pinch valve (3; 3'); and
the tapering region (19; 19') of the second connection element (7; 7'), tapering conically in the direction of the second pinch valve (4; 4'), being connected to the inlet of the second pinch valve (4; 4') by way of the inlet-side flange (22; 22') of the second pinch valve (4; 4').

14. The powder pump (100; 100') as claimed in one of claims 1 to 13,
a control device (50) also being provided, by way of which the first and second pinch valves (3, 4) are activated in such a way that, in an intake phase of the powder pump (100; 100'), the first pinch valve (3; 3') is open and the second pinch valve (4; 4') is closed, while at the same time a negative pressure is created in the powder chamber (10; 10') by way of the at least one connection (5a, 5b; 5a', 5b'), and, in a discharge phase of the powder pump (100; 100'), the first pinch valve (3; 3') is closed and the second pinch valve (4; 4') is open, while at the same time a positive pressure is created in the powder chamber (10; 10') by way of the at least one connection (5a, 5b; 5a', 5b').

15. An arrangement comprising a powder pump (100) as claimed in one of claims 1 to 14 and a further identical powder pump (100'), the arrangement also having a first Y piece (70) for connecting a powder line, in particular a powder hose, both to the inlet of the first pinch valve (3) of the powder pump (100) and to the inlet of the first pinch valve (3') of the further identical powder pump (100'), and a second Y piece (71) also being provided, for connecting a powder line, in particular a powder hose, both to the outlet of the second pinch valve (4) of the powder pump (100) and to the outlet of the second pinch valve (4') of the further identical powder pump (100'),
the powder pump (100) and the further powder pump (100') being operated in phase opposition.

## Patentansprüche

1. Pulverpumpe (100; 100') zum Fördern von Beschichtungspulver, wobei die Pulverpumpe (100; 100') Folgendes aufweist:
- eine Pulverkammer (10; 10') mit einem vorzugsweise zylinderförmigen und insbesondere kreiszylinderförmigen Mantelrohr (1; 1') und einem im Inneren des Mantelrohres (1; 1') angeordneten gasdurchlässigen Filterelement (2; 2');
- ein erstes an dem ansaugseitigen Endbereich der Pulverkammer (10; 10') angeschlossenes Quetschventil (3; 3'); und
- ein zweites an dem förderseitigen Endbereich der Pulverkammer (10; 10') angeschlossenes Quetschventil (4; 4'),
wobei die Pulverpumpe (100; 100') mindestens einen Anschluss (5a, 5b; 5a', 5b') aufweist zum abwechselnden Anlegen eines Überdruckes und eines Unterdruckes in der Pulverkammer (10; 10'), **gekennzeichnet durch**
ein erstes mit dem ersten Quetschventil (3; 3') verbundenes Anschlusselement (6; 6'), welches auf oder in den ansaugseitigen Endbereich der Pulverkammer (10; 10') gesteckt ist;
ein zweites mit dem zweiten Quetschventil (4; 4') verbundenes Anschlusselement (7; 7'), welches auf oder in den förderseitigen Endbereich der Pulverkammer (10; 10') gesteckt ist;
eine Halterung (8; 8') zum Aufnehmen der Pulverkammer (10; 10') mit den beidseitig auf- bzw. eingesteckten Anschlusselementen (6, 7; 6', 7'); und eine Arretierung zum Arretieren der beidseitig auf bzw. in die Pulverkammer (10; 10') gesteckten Anschlusselemente (6, 7; 6', 7') relativ zu der Halterung (8; 8'), wenn die Pulverkammer (10; 10') mit den beidseitig auf- bzw. eingesteckten Anschlusselementen (6, 7; 6', 7') von der Halterung (8; 8') aufgenommen ist.

2. Pulverpumpe (100; 100') nach Anspruch 1,
wobei die Arretierung einen ersten mit dem ersten Anschlusselement (6; 6') verbundenen und von dem ersten Anschlusselement (6; 6') radial abstehenden Bolzen (11; 11') und einen zweiten mit dem zweiten Anschlusselement (7; 7') verbundenen und von dem zweiten Anschlusselement (7; 7') radial abstehenden Bolzen (12; 12') aufweist; und
wobei die Arretierung ferner einen ersten in der Halterung (8; 8') vorgesehenen und senkrecht zur Längsrichtung (L) der Pulverkammer (10; 10') verlaufenden Längsschlitz (13; 13') zur Aufnahme des von dem ersten Anschlusselement (6; 6') radial abstehenden ersten Bolzens (11; 11') und einen zweiten in der Halterung (8; 8') vorgesehenen und senkrecht zur Längsrichtung (L) der Pulverkammer (10; 10') verlaufenden Längsschlitz (14; 14') zur Aufnahme des von dem zweiten Anschlusselement (7; 7') radial abstehenden zweiten Bolzens (12; 12') aufweist.

3. Pulverpumpe (100; 100') nach Anspruch 2,
wobei sich an dem Ende des ersten Längsschlitzes (13; 13') rechtwinklig ein kurzer Querschlitz (15; 15') ansetzt; oder
wobei sich an dem Ende des zweiten Längsschlitzes (14; 14') rechtwinklig ein kurzer Querschlitz (15; 15') ansetzt.

4. Pulverpumpe (100; 100') nach Anspruch 2 oder 3,
wobei die Arretierung (2; 2') diametral zueinander angeordnete erste Bolzen (11; 11') aufweist, die jeweils mit dem ersten Anschlusselement (6; 6') verbunden sind und jeweils von dem ersten Anschlusselement (6; 6') radial abstehen, und wobei die Halterung (8; 8') zwei erste Längsschlitze (13; 13') aufweist zum Aufnehmen von jeweils einem der beiden ersten Bolzen (11; 11').

5. Pulverpumpe (100; 100') nach einem der Ansprüche 2 bis 4,
wobei die Arretierung zwei diametral zueinander angeordnete zweite Bolzen (12; 12') aufweist, die jeweils mit dem zweiten Anschlusselement (7; 7') verbunden sind und jeweils von dem zweiten Anschlusselement (7; 7') radial abstehen; und wobei die Halterung (8; 8') zwei zweite Längsschlitze (14; 14') aufweist zum Aufnehmen von jeweils einem der beiden zweiten Bolzen (12; 12').

6. Pulverpumpe (100; 100') nach einem der Ansprüche 1 bis 5,
wobei das erste Anschlusselement (6; 6') einen der Pulverkammer (10; 10') zugewandten rohrstutzenförmigen Bereich (16; 16') und einen dem ersten Quetschventil (3; 3') zugewandten und in Richtung des ersten Quetschventils (3; 3') konisch zulaufenden Bereich (17; 17') aufweist,
wobei der rohrstutzenförmige Bereich (16; 16') des ersten Anschlusselements (6; 6') auf oder in den ansaugseitigen Endbereich der Pulverkammer (10; 10') gesteckt und der konisch zulaufende Bereich (17; 17') des ersten Anschlusselements (6; 6') mit dem ersten Quetschventil (3; 3') verbunden ist.

7. Pulverpumpe (100; 100') nach Anspruch 6,
wobei der rohrstutzenförmige Bereich (16; 16') des ersten Anschlusselements (6; 6') und der konisch in Richtung des ersten Quetschventils (3; 3') zulaufende Bereich (17; 17') des ersten Anschlusselements (6; 6') ineinander gesteckt und relativ zueinander vorzugsweise mit Hilfe mindestens einer Senkschraube (20) lösbar arretiert sind.

8. Pulverpumpe (100; 100') nach einem der Ansprüche 1 bis 7,
wobei das zweite Anschlusselement (7; 7') einen der Pulverkammer (10; 10') zugewandten rohrstutzenförmigen Bereich (18; 18') und einen dem zweiten Quetschventil (4; 4') zugewandten und in Richtung des zweiten Quetschventils (4; 4') konisch zulaufenden Bereich (19; 19') aufweist, wobei der rohrstutzenförmige Bereich (18; 18') des zweiten Anschlusselements (7; 7') auf oder in den förderseitigen Endbereich der Pulverkammer (10; 10') gesteckt und der konisch zulaufende Bereich (19; 19') des zweiten Anschlusselements (7; 7') mit dem zweiten Quetschventil (4; 4') verbunden ist.

9. Pulverpumpe (100; 100') nach Anspruch 8,
wobei der rohrstutzenförmige Bereich (18; 18') des zweiten Anschlusselements (7; 7') und der konisch in Richtung des zweiten Quetschventils (4; 4') zulaufende Bereich (19; 19') des zweiten Anschlusselements (7; 7') ineinander gesteckt und relativ zueinander vorzugsweise mit Hilfe mindestens einer Senkschraube (20) lösbar arretiert sind.

10. Pulverpumpe (100; 100') nach einem der Ansprüche 1 bis 9,
wobei das erste Quetschventil (3; 3') und das zweite Quetschventil (4; 4') jeweils Folgendes aufweisen:
- ein Quetschventilgehäuse (21; 21') mit einem einlassseitigen Flansch (22; 22') und einem auslassseitigen Flansch (23; 23'); und
- ein elastisch verformbares Ventilelement (24; 24') in Gestalt eines Schlauchabschnittes,
wobei das Ventilelement (24; 24') im Inneren des Quetschventilgehäuses (21; 21') derart angeordnet ist, dass der Einlass des Quetschventils (3, 4; 3', 4') mit dem Auslass des Quetschventils (3, 4; 3', 4') über das als Schlauchabschnitt gebildete Ventilelement (24; 24') in Fluidverbindung bringbar ist,
wobei das Quetschventilgehäuse (21; 21') mindestens einen Anschluss (25; 25') aufweist zum bedarfsweisen Zuführen von Druckluft in den zwischen der Innenwand des Quetschventilgehäuses (21; 21') und dem im Inneren des Quetschventilgehäuses (21; 21') angeordneten Ventilelement (24; 24') gebildeten Raum (26; 26').

11. Pulverpumpe (100; 100') nach Anspruch 10,
wobei das Quetschventilgehäuse (21; 21') mindestens einen Anschluss (9) aufweist zum bedarfsweisen Anlegen eines Unterdruckes in den zwischen der Innenwand des Quetschventilgehäuses (21; 21') und dem im Inneren des Quetschventilgehäuses (21; 21') angeordneten Ventilelement (24; 24') gebildeten Raum (26).

12. Pulverpumpe (100; 100') nach Anspruch 10 oder 11,
wobei der einlassseitige Flansch (22; 22') und der auslassseitige Flansch (23; 23') des Quetschventils (3, 4; 3', 4') jeweils mit dem Quetschventilgehäuse (21; 21') mit Hilfe von Schrauben (27) lösbar befestigt ist.

13. Pulverpumpe (100; 100') nach einem der Ansprüche 10 bis 12 in Kombination mit Anspruch 6 oder einem auf Anspruch 6 rückbezogenen Anspruch, wobei der konisch in Richtung des ersten Quetschventils (3; 3') zulaufende Bereich (17; 17') des ersten Anschlusselements (6; 6') mit dem Auslass des ersten Quetschventils (3; 3') über den auslassseitigen Flansch (23; 23') des ersten Quetschventils (2; 2') verbunden ist; und
wobei der konisch in Richtung des zweiten Quetschventils (4; 4') zulaufende Bereich (19; 19') des zweiten Anschlusselements (7; 7') mit dem Einlass des zweiten Quetschventils (4; 4') über den einlassseitigen Flansch (22; 22') des zweiten Quetschventils (4; 4') verbunden ist.

14. Pulverpumpe (100; 100') nach einem der Ansprüche 1 bis 13,
wobei ferner eine Steuereinrichtung (50) vorgesehen ist, über welche das erste und zweite Quetschventil (3, 4) derart angesteuert werden, dass in einer Ansaugphase der Pulverpumpe (100; 100') das erste Quetschventil (3; 3') geöffnet und das zweite Quetschventil (4; 4') geschlossen ist, während gleichzeitig über den mindestens einen Anschluss (5a, 5b; 5a', 5b') ein Unterdruck in der Pulverkammer (10; 10') angelegt wird, und wobei in einer Ausstoßphase der Pulverpumpe (100; 100') das erste Quetschventil (3; 3') geschlossen und das zweite Quetschventil (4; 4') geöffnet ist, während gleichzeitig über den mindestens einen Anschluss (5a, 5b; 5a', 5b') ein Überdruck in der Pulverkammer (10; 10') angelegt wird.

15. Anordnung bestehend aus einer Pulverpumpe (100) nach einem der Ansprüche 1 bis 14 und einer weiteren baugleichen Pulverpumpe (100'), wobei die Anordnung ferner ein erstes Y-Stück (70) aufweist zum Verbinden einer Pulverleitung, insbesondere eines Pulverschlauches, sowohl mit dem Einlass des ersten Quetschventils (3) der Pulverpumpe (100) als auch mit dem Einlass des ersten Quetschventils 100') der weiteren baugleichen Pulverpumpe (100'), und wobei ferner ein zweites Y-Stück (71) vorgesehen ist zum Verbinden einer Pulverleitung, insbesondere eines Pulverschlauches, sowohl mit dem Auslass des zweiten Quetschventils (4) der Pulverpumpe (100) als auch mit dem Auslass des zweiten Quetschventils (4') der weiteren baugleichen Pulverpumpe (100'),
wobei die Pulverpumpe (100) und die weitere Pulverpumpe 100') gegenphasig betrieben werden.

## Revendications

1. Pompe à poudre (100 ; 100') pour transporter une poudre de revêtement, la pompe à poudre (100 ; 100') ayant les éléments suivants :
- une chambre à poudre (10 ; 10') avec un tube-boîtier (1 ; 1') de préférence cylindrique et en particulier cylindrique à base circulaire, et un élément de filtre perméable aux gaz (2 ; 2') agencé à l'intérieur du tube-boîtier (1 ; 1');
- une première valve à étranglement (3 ; 3'), connectée à la région terminale côté entrée de la chambre à poudre (10 ; 10') ; et
- une seconde valve à étranglement (4 ; 4') connectée à la région terminale côté sortie de la chambre à poudre (10 ; 10'),
la pompe à poudre (100 ; 100') ayant au moins une connexion (5a, 5b ; 5a', 5b') pour créer alternativement une pression positive et une pression négative dans la chambre à poudre (10 ; 10'),
**caractérisée par**
un premier élément de connexion (6 ; 6'), qui est connecté à la première valve à étranglement (3 ; 3'), et qui est monté par-dessus ou introduit à l'intérieur de la région terminale côté entrée de la chambre à poudre (10; 10');
un second élément de connexion (7 ; 7'), qui est connecté à la seconde valve à étranglement (4 ; 4'), et qui est monté par-dessus ou introduit à l'intérieur de la région terminale côté sortie de la chambre à poudre (10; 10');
une monture (8 ; 8') pour recevoir la chambre à poudre (10 ; 10') avec les éléments de connexion (6, 7 ; 6', 7') montés par-dessus ou introduits à l'intérieur sur les deux côtés ; et
un mécanisme d'arrêt pour arrêter les éléments de connexion (6, 7 ; 6', 7') montés par-dessus ou introduits à l'intérieur de la chambre à poudre (10 ; 10') sur les deux côtés, en relation par rapport à la monture (8 ; 8') quand la chambre à poudre (10 ; 10') avec les éléments de connexion (6, 7 ; 6', 7') montés par-dessus ou introduits à l'intérieur sur les deux côtés a été reçue par la monture (8 ; 8').

2. Pompe à poudre (100 ; 100') selon la revendication 1,
dans laquelle le mécanisme d'arrêt comprend un premier boulon (11 ; 11'), connecté au premier élément de connexion (6 ; 6') et se projetant radialement depuis le premier élément de connexion (6 ; 6'), et un second boulon (12 ; 12'), connecté au second élément de connexion (7 ; 7') et se projetant radialement depuis le second élément de connexion (7 ; 7') ; et
dans laquelle le mécanisme d'arrêt comporte également une première fente longitudinale (13 ; 13'), ménagée dans la monture (8 ; 8') et s'étendant perpendiculairement à la direction longitudinale (L) de la chambre à poudre (10 ; 10') pour recevoir le premier boulon (11 ; 11'), se projetant radialement depuis le premier élément de connexion (6 ; 6'), et une seconde fente longitudinale (14 ; 14'), ménagée dans la monture (8 ; 8') et s'étendant perpendiculairement à la direction longitudinale (L) de la chambre à poudre (10 ; 10'), pour recevoir le second boulon (12 ; 12'), se projetant radialement depuis le second élément de connexion (7 ; 7').

3. Pompe à poudre (100 ; 100') selon la revendication 2,
dans laquelle l'extrémité de la première fente longitudinale (13 ; 13') est réunie à angle droit à une courte fente transversale (15 ; 15') ; ou l'extrémité de la seconde fente longitudinale (14 ; 14') est réunie à angle droit à une courte fente transversale (15 ; 15').

4. Pompe à poudre (100 ; 100') selon la revendication 2 ou 3,
dans laquelle le mécanisme d'arrêt (2 ; 2') comprend des premiers boulons (11 ; 11'), qui sont agencés diamétralement en relation l'un par rapport à l'autre, qui sont connectés chacun au premier élément de connexion (6 ; 6'), et qui se projettent chacun radialement depuis le premier élément de connexion (6 ; 6'), et dans laquelle la monture (8, 8') comporte deux premières fentes longitudinales (13 ; 13') destinées chacune à recevoir l'un des deux premiers boulons (11 ; 11').

5. Pompe à poudre (100 ; 100') selon l'une quelconque des revendications 2 à 4,
dans laquelle le mécanisme d'arrêt comprend deux seconds boulons (12 ; 12'), qui sont agencés diamétralement en relation l'un par rapport à l'autre, qui sont connectés chacun au second élément de connexion (7 ; 7'), et qui se projettent chacun radialement depuis le second élément de connexion (7 ; 7'), et dans laquelle la monture (8, 8') comporte deux secondes fentes longitudinales (14 ; 14') destinées chacune à recevoir l'un des deux seconds boulons (12 ; 12').

6. Pompe à poudre (100 ; 100') selon l'une quelconque des revendications 1 à 5,
dans laquelle le premier élément de connexion (6 ; 6') comporte une région semblable à un tenon (16 ; 16'), en face de la chambre à poudre (10 ; 10'), et une région effilée (17 ; 17'), en face de la première valve à étranglement (3 ; 3') et effilée de manière conique dans la direction de la première valve à étranglement (3 ; 3'),
la région semblable à un tenon (16 ; 16') du premier élément de connexion (6 ; 6') est monté par-dessus ou introduit à l'intérieur de la région terminale côté entrée de la chambre à poudre (10 ; 10'), et la région effilée de manière conique (17 ; 17') du premier élément de connexion (6 ; 6') est connectée à la première valve à étranglement (3 ; 3').

7. Pompe à poudre (100 ; 100') selon la revendication 6,
dans laquelle la région semblable à un tenon (16 ; 16') du premier élément de connexion (6 ; 6') et la région effilée (17 ; 17') du premier élément de connexion (6 ; 6'), effilée de manière conique dans la direction de la première valve à étranglement (3 ; 3'), sont insérées chacune l'une dans l'autre et arrêtées de manière libérable en relation l'une par rapport à l'autre, de préférence avec l'aide d'au moins une vis à tête fraisée (20).

8. Pompe à poudre (100 ; 100') selon l'une quelconque des revendications 1 à 7,
dans laquelle le second élément de connexion (7 ; 7') comporte une région semblable à un tenon (18 ; 18') en face de la chambre à poudre (10 ; 10'), et une région effilée (19 ; 19'), en face de la seconde valve à étranglement (4 ; 4') et effilée de manière conique dans la direction de la seconde valve à étranglement (4 ; 4'),
la région semblable à un tenon (18 ; 18') du second élément de connexion (7 ; 7') est montée par-dessus ou introduite à l'intérieur de la région terminale côté sortie de la chambre à poudre (10 ; 10'), et la région effilée de manière conique (19 ; 19') du second élément de connexion (7 ; 7') est connectée à la seconde valve à étranglement (4 ; 4').

9. Pompe à poudre (100 ; 100') selon la revendication 8,
dans laquelle la région semblable à un tenon (18 ; 18') du second élément de connexion (7 ; 7') et la région effilée (19 ; 19') du second élément de connexion (7 ; 7'), effilée de manière conique dans la direction de la seconde valve à étranglement (4 ; 4'), sont insérées chacune l'une dans l'autre et arrêtées de manière libérable en relation l'une par rapport à l'autre, de préférence avec l'aide d'au moins une vis à tête fraisée (20).

10. Pompe à poudre (100 ; 100') selon l'une quelconque des revendications 1 à 9,
dans laquelle la première valve à étranglement (3 ; 3') et la seconde valve à étranglement (4 ; 4') comprennent chacune les éléments suivants :
- un boîtier de valve à étranglement (21 ; 21') avec une bride côté entrée (22 ; 22') et une bride côté sortie (23 ; 23') ; et
- un élément de valve élastiquement déformable (24 ; 24') sous la forme d'une portion en tuyau souple,
l'élément de valve (24 ; 24') étant agencé à l'intérieur du boîtier de valve à étranglement (21 ; 21') d'une manière telle que l'entrée de la valve à étranglement (3, 4 ; 3', 4') peut être amenée en connexion fluidique avec la sortie de la valve à étranglement (3, 4 ; 3', 4') au moyen de l'élément de valve (24 ; 24') formé comme une portion en tuyau souple,
le boîtier de valve à étranglement (21 ; 21') comprend au moins une connexion (25 ; 25') pour alimenter de l'air comprimé lorsque nécessaire dans l'espace (26 ; 26') formé entre la paroi intérieure du boîtier de valve à étranglement (21 ; 21') et l'élément de valve (24 ; 24') agencé à l'intérieur du boîtier de valve à étranglement (21 ; 21').

11. Pompe à poudre (100 ; 100') selon la revendication 10,
dans laquelle le boîtier de valve à étranglement (21 ; 21') comporte au moins une connexion (9) pour créer une pression négative si et lorsque nécessaire dans l'espace (26) formé entre la paroi intérieure du boîtier de valve à étranglement (21 ; 21') et l'élément de valve (24 ; 24') agencé à l'intérieur du boîtier de valve à étranglement (21 ; 21').

12. Pompe à poudre (100 ; 100') selon la revendication 10 ou 11,
dans laquelle la bride côté entrée (22 ; 22') et la bride côté sortie (23 ; 23') de la valve à étranglement (3, 4 ; 3', 4') sont fixées respectivement de façon libérable au boîtier de valve à étranglement (21 ; 21') avec l'aide de vis (27).

13. Pompe à poudre (100 ; 100') selon l'une des revendications 10 à 12 en combinaison avec la revendication 6 ou une revendications dépendantes de la revendication 6, dans laquelle la région effilée (17 ; 17') du premier élément de connexion (6 ; 6'), effilée de manière conique dans la direction de la première valve à étranglement (3 ; 3'), est connectée à la sortie de la première valve à étranglement (3 ; 3') au moyen de la bride côté sortie (23 ; 23') de la première valve à étranglement (3 ; 3') ; et
la région effilée (19 ; 19') du second élément de connexion (7 ; 7'), effilée de manière conique dans la direction de la seconde valve à étranglement (4 ; 4'), est connectée à l'entrée de la seconde valve à étranglement (4 ; 4') au moyen de la bride côté entrée (22 ; 22') de la seconde valve à étranglement (4 ; 4').

14. Pompe à poudre (100 ; 100') selon l'une quelconque des revendications 1 à 13,
dans laquelle il est également prévu un dispositif de commande (50), au moyen duquel la première et la seconde valve à étranglement (3, 4) sont activées, de telle façon que, dans une phase d'admission de la pompe à poudre (100 ; 100'), la première valve à étranglement (3 ; 3') est ouverte et la seconde valve à étranglement (4 ; 4') est fermée, tandis qu'en même temps une pression négative est créée dans la chambre à poudre (10 ; 10') au moyen de ladite au moins une connexion (5a, 5b ; 5a', 5b') et, dans une phase de décharge de la pompe à poudre (100 ; 100'), la première valve à étranglement (3 ; 3') est fermée et la seconde valve à étranglement (4 ; 4') est ouverte, tandis qu'en même temps une pression positive est créée dans la chambre à poudre (10 ; 10') au moyen de ladite au moins une connexion (5a, 5b ; 5a', 5b').

15. Agencement comprenant une pompe à poudre (100) selon l'une quelconque des revendications 1 à 14 et une autre pompe à poudre identique (100'),
dans lequel l'agencement comprend également une première pièce en Y (70) pour connecter un conduit de poudre, en particulier un tuyau souple de poudre, à la fois à l'entrée de la première valve à étranglement (3) de la pompe à poudre (100) et à l'entrée de la première valve à étranglement (3') de l'autre pompe à poudre identique (100'), et une seconde pièce en Y (71), destinée à être connectée à un conduit de poudre, en particulier un tuyau souple à poudre, à la fois à la sortie de la seconde valve à étranglement (4) de la pompe à poudre (100) et à la sortie de la seconde valve à étranglement (4') de l'autre pompe à poudre identique (100'),
la pompe à poudre (100) et l'autre pompe à poudre (100') sont amenées à fonctionner en opposition de phase.
